(19) Europäisches Patentamt
European Patent Office
Office européen des brevets

(11) EP 1 530 313 B1

(12) **EUROPEAN PATENT SPECIFICATION**

(45) Date of publication and mention
of the grant of the patent:
**16.07.2008 Bulletin 2008/29**

(51) Int Cl.:
*H04L 1/20* (2006.01)       *H04B 3/54* (2006.01)

(21) Application number: **03025428.8**

(22) Date of filing: **05.11.2003**

(54) **Adaptation of a PLC or DSL modem using quality data**

Anpassung eines PLC oder DSL Modems mittels Qualitätsdaten

Adaptation d'un modem PLC ou DSL utilisant des données de qualité

(84) Designated Contracting States:
**DE FR GB**

(43) Date of publication of application:
**11.05.2005 Bulletin 2005/19**

(73) Proprietor: **Sony Deutschland GmbH**
**10785 Berlin (DE)**

(72) Inventors:
• **Schwager, Andreas,**
**Stuttgart Technology Center**
**70327 Stuttgart (DE)**
• **Stadelmeier, Lothar,**
**Stuttgart Technology Center**
**70327 Stuttgart (DE)**

• **Zumkeller, Markus,**
**Stuttgart Technology Center**
**70327 Stuttgart (DE)**

(74) Representative: **Müller - Hoffmann & Partner**
**Patentanwälte,**
**Innere Wiener Strasse 17**
**81667 München (DE)**

(56) References cited:
**EP-A- 0 987 852          US-A- 4 479 215**
**US-A- 5 245 633          US-A1- 2003 129 978**
**US-B1- 6 404 822**

**Description**

The present invention relates to a method for operating a PLC or DSL modem device, in particular in a communication network or in a communication arrangement.

In the field of communication arrangements and communication networks different kinds of devices for information exchange are often involved. For instance, so called power line communication modems or power line communication modem devices or PLC modems or PLC modem devices may be used which are adapted and designed to use power lines as a communication channel or a part thereof when communicating with respective communication partner devices.

Nowadays, known PLC or DSL modems in communication arrangements or communication networks of the art allocate a predefined communication spectrum of a possible communication frequency domain in a fixed manner. Therefore known communication schemes using PLC or DSL modem devices are beyond from being flexible. This is in particular a disadvantage in cases where the predefined communication spectrum with respect to a given communication channel suffers from low communication capabilities or communication features for instance because of signal distortions, signal damping, and/or noise taking place in the chosen communication channel and the predefined and selected communication spectrum.

In EP 0987852 A2 a wireline communication system and a method of frequency allocation therein is disclosed, wherein the frequency spectrum is partitioned based on an estimate of the loop length of a subscriber unit modem from an exchange modem. Up to a threshold frequency at which received transmissions from a subscriber having a longest loop length become indistinguishable by the exchange modem from a noise floor, up-link performance on all loop lengths is limited to correspond to that of the longest loop. At frequencies above the threshold frequency subsets of subscribers having relatively short loop lengths use high frequency carriers that have signal to noise ratios sufficient to support information transmission in these elevated frequency bands. The loop length is measured in a training sequence, wherein a path-loss on the wireline is determined.

It is an object of the present invention to provide a method for operating a PLC or DSL modem device which enables a particular reliable and flexible communication between a given PLC or DSL modem device and a respective communication partner.

The object is achieved by a method for operating a PLC or DSL modem device with the characterizing features of independent claim 1. Additionally the object is achieved by a PLC or DSL modem device, a communication arrangement, a computer program, as well as with a computer readable storage medium according to the characterizing features of independent claims 19, 21, 23, and 24, respectively.

The method for operating a PLC or DSL modem device according to the present invention is adapted in particular for PLC or DSL modem device operation in a communication network or in a communication arrangement. The inventive method comprises a step of generating and/or providing communication quality data and/or of at least one communication channel, a step of determining at least communication spectrum data and communication channel data, a step of determining and/or selecting a communication spectrum and/or a communication channel, and a step of communicating with at least one communication partner device via said selected communication channel and/or said selected communication spectrum. The respective communication quality data are generated and/or provided with respect to at least one communication channel between said PLC or DSL modem device and at least one communication partner device. Said communication quality data are descriptive at least for communication capabilities, a communication quality and/or for communication features at least of said at least one communication partner device and/or of said at least communication channel. Said communication spectrum data and/or said communication data are determined based on said communication quality data and they are descriptive for at least one communication spectrum for said PLC or DSL modem device and/or for said at least one communication channel each of which with respect to said at least one communication partner device. Said communication spectrum and/or said communication channel are determined and/or selected from at least one communication channel each of which on the basis of said communication spectrum data and/or said communication channel data.

It is therefore a basic idea of the present invention to enable a PLC or DSL modem device to generate and/or to provide data describing communication capabilities, communication quality and/or communication features of at least one communication partner device and/or of at least one communication channel for communication with said at least one communication partner device. These data are called communication quality data as they are described in the broad sense the quality of possible communication.

The invention can also be applied to PLC as well as to DSL technology. Also, wireless transmissions and technologies are thinkable.

The invention preferably affects all modems participating to the communication. Or even these modems who are not participating to the communication or belonging to an other system are affected, because of interoperability or coexistence. A PLC or DSL system comprises several modems communicating to each other. There might be several PLC systems connected to one Power line.

It is a further idea of the present invention to use said communication quality data so as to determine communication spectrum data and/or communication channel data on the basis of said communication quality data. Said communication spectrum data and/or said communication channel are chosen to be descriptive for at least one communication spectrum for said PLC or DSL modem device and/or for said at least one communication channel each of which in relation to said at least one communication partner device. Based on said communication spectrum data and/or on said communication channel data a communication spectrum is determined and/or selected for a possible communication with said communication partner device. Additionally or alternatively said communication spectrum data and/or said communication channel data are used as a basis for determining and/or for selecting a respective communication channel too for realizing said communication process between said PLC modem device and said communication partner device.

According to a further or alternative aspect of the present invention the inventive method comprises a step of detecting at least one communication partner device which is connected to said PLC or DSL modem device via at least one communication channel.

Additionally or alternatively, also a step of detecting said at least one communication channel between said PLC or DSL modem device and at least one communication partner device itself may be comprised.

In a preferred embodiment of the inventive method for operating a PLC or DSL modem device said step of generating and/or providing communication quality data comprises a process of determining and/or measuring noise of said at least one communication channel, in particular of a power line thereof.

Further additionally or alternatively said step of generating and/or providing communication quality data may comprise a process of determining and/or measuring a signal attenuation, a signal transmission level, a distance of said PLC or DSL modem device to said communication partner device and/or a signal-to-noise-ratio or with respect to said at least one communication channel, in particular of or with respect to a power line thereof. The case of determining and/or measuring a signal-to-noise-ratio this may be realized based on said noise, attenuation, signal transmission level, distance determined and/or measured.

It is further preferred to analyse for said at least one communication partner device a plurality of communication channels, in particular all available communication channels for said communication partner device, in particular within said steps of detecting said at least one communication partner device and/or said at least one communication channel, within said step of generating and/or providing said communication quality data, within said step of determining at least said communication spectrum data and/or said communication channel data, and/or within said step of determining and/or selecting said communication spectrum and/or said communication channel.

According to a further and advantageous embodiment of the inventive method for operating a PLC or DSL modem device a communication spectrum and/or a communication channel may be selected and/or used which are not simultaneously used or allocated by communication processes of and/or between other communication partner devices within said communication network or communication arrangement, in particular within said step of determining and/or selecting a communication spectrum and/or a communication channel.

According to a further preferred embodiment of the inventive method for a communication channel having or realizing a comparable larger or comparable large communication distance between said PLC or DSL modem device and said selected communication partner device a comparable lower or comparable low frequency range is chosen for said communication spectrum, in particular within said step of determining and/or selecting a communication spectrum.

Additionally or alternatively for a communication channel having or realizing a comparable shorter or comparable short communication distance between said PLC or DSL modem device and said selected communication partner device a communication spectrum with a comparable high or comparable higher frequency range is chosen, in particular within said step of determining and/or selecting a communication spectrum.

A further preferred embodiment of the inventive method is provided, wherein a process of checking the presence, existence and/or activity of other and external radio sources and/or radio services is performed, in particular within said step of generating and/or providing communication quality data, within said step of determining at least communication spectrum data and/or communication channel data, and/or within said step of determining and/or selecting a communication spectrum and/or a communication channel, wherein said communication quality data, said communication spectrum data, said communication channel data, said communication spectrum and/or said communication channel are chosen or selected in order to avoid spectral ranges where other and external radio sources and/or radio services exist, are present and/or are active, in order to reduce and/or avoid disturbances and/or interferences with, to and/or from other and external radio sources and/or radio services.

Still an embodiment is proposed, wherein within said process of checking the presence, existence and/or activity of other and external radio sources and/or radio services PLC or DSL modem devices snoop in the air if there are any radio services and/or radio sources available and wherein - if a relevant service and/or source is found at any frequency location - the respective frequency band is omitted in power line or DSL communication.

Additionally it is proposed that said process of checking the presence, existence and/or activity of other and external radio sources and/or radio services is performed in a wireless manner.

It is a further aspect of the present invention to provide a method for operating a communication arrangement or a communication network, said communication arrangement or said communication network comprising a plurality of PLC or DSL modem devices, wherein for each of said PLC or DSL modem devices the method for operating a PLC or DSL modem device according to the present invention is performed.

An alternative or additional embodiment is provided, wherein a pre-defined reference signal is generated by at least one PLC or DSL modem device and transmitted via at least one available communication channel, wherein possible communication partner devices measure said pre-defined reference signal via said at least one available communication channel and/or analyse the respective measurement data, wherein based on said measurements said communication quality data, said communication spectrum data, said communication channel data, said communication spectrum and/or said communication channel are chosen or selected, in particular in order to avoid spectral ranges where other and external radio sources and/or radio services exist, are present and/or are active,

Still an alternative or additional embodiment is provided, wherein a pre-defined reference signal is generated by at least one PLC or DSL modem device and transmitted via at least one available communication channel, wherein possible communication partner devices measure said pre-defined reference signal via channels other than said available communication channels and/or analyse the respective measurement data, wherein based on said measurements said communication quality data, said communication spectrum data, said communication channel data, said communication spectrum and/or said communication channel are chosen or selected, in particular in order to avoid spectral ranges where other and external radio sources and/or radio services exist, are present and/or are active,

Still a further embodiment is proposed, wherein said PLC or DSL modem device measures the radiation of the power line or DSL channel where it is connected to, wherein one modem device sends a well known signal as a reference signal on the power lines or DSL channels and all participating modems receive and/or measure this signal over a wireless channel, in particular with their terrestrial antenna, wherein with this measurement the modem devices determine the radiation of the power line or DSL channel depending on frequency, and wherein the result of this measurements is exchanged to all modem devices in order to not use or to avoid the frequencies or spectral ranges with respect to the relevant radiation for PLC or DSL communication.

Additionally or alternatively, said at least one PLC or DSL modem device and/or said possible communication partner devices communicate and/or transmit the respective measurement data, its respective analysis results, said communication quality data, said communication spectrum data, said communication channel data, said communication spectrum and/or said communication channel to said possible communication partner devices and/or said at least one PLC or DSL modem device,

Further it is proposed that said processes of generating, of transmitting said predefined reference signal, of measuring, of analysing the measurement, and/or of communicating the respective data to said possible communication partner devices and/or said at least one PLC or DSL modem device are performed during said step of generating and/or providing communication quality data, within said step of determining at least communication spectrum data and/or communication channel data, and/or within said step of determining and/or selecting a communication spectrum and/or a communication channel,

It is a further aspect of the present invention to provide a PLC or DSL modem device which is capable of and/or comprises means for realizing the method for operating a PLC or DSL modem device according to the present invention.

Preferably, said inventive PLC or DSL modem device may comprise means for receiving radio sources and/or radio services.

Further, said inventive PLC or DSL modem device may comprise terrestrial tuner device and/or an antenna device for receiving radio sources and/or radio services.

Additionally, it is a further aspect of the present invention to provide a communication arrangement or a communication network, which is capable of and/or comprises means for realizing the method for operating a communication arrangement according to the present invention and/or the steps thereof and/or which comprises a plurality of PLC or DSL modem devices according to the present invention.

Furthermore, a computer program product is provided according to the present invention which comprises computer program means which is capable of performing and/or realizing the method for operating a PLC or DSL modem device according to the present invention and/or the method for operating a communication arrangement according to the present invention and/or the steps thereof, when it is executed on a computer, a digital signal processing means and/or the like.

Finally, a computer readable storage medium is provided by the present invention which comprises a computer program product according to the present invention.

In the following these and further aspects of the present invention will be elucidated in more detail taking account to the following remarks:

The present invention relates in particular to the spectrum placement of PLC or DSL communication.

Depending on e.g. measured SNR and distance between communicating PLC or DSL modems their Communication Spectrum shall be placed in the frequency domain.

Known PLC or DSL Modems today allocate a predefined communication spectrum in frequency domain. Therefore, known PLC or DSL Modems today do not use the available bandwidth efficiently. According to the present invention this is optimised by intelligent placement of the Communication spectrum.

- Using better spectrum placements coexistence problems between PLC or DSL modems can be solved.
- Available Bandwidth can be used more efficiently which results in higher throughput capabilities.

Every node participating in PLC or DSL communications measures Noise on the power line, attenuation and distance to the communication partner.

With the knowledge of the transmission level, attenuation and noise the available SNR can be calculated. Channel capabilities can be calculated for various possible communication windows of the SNR graph. The new initiated communication shall be placed to a frequency location where the calculated Channel Capability fits best to the demanded transmission capability.

If a later starting communication decides to use the same frequency location that was already allocated by an other communication the communication of the shorter distance between the modems shall move to a second "best fit" location at a higher frequency. The communication via the longer distance shall use the spectrum at lower frequencies.

The background behind this mechanism is:

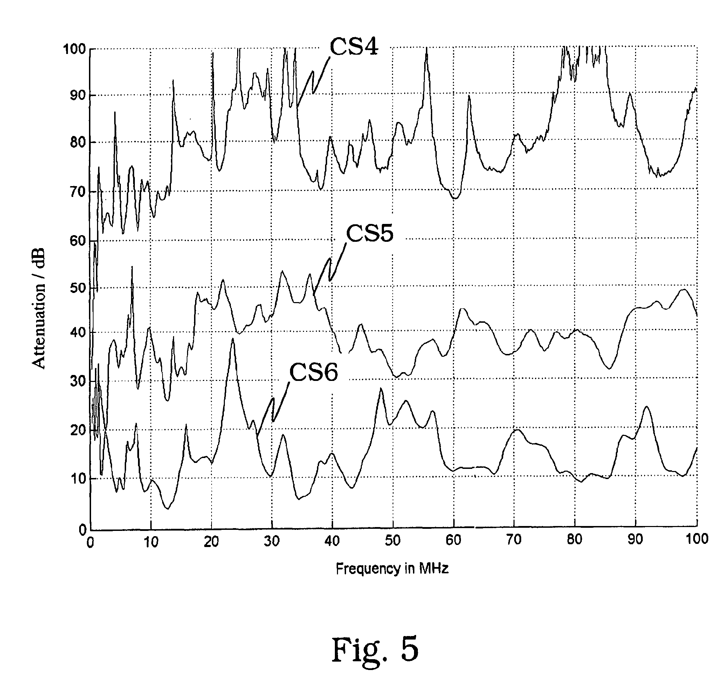

Statistically PLC or DSL Channel via longer distances between the modems have higher attenuation than short distance communication. To use frequency spectrum efficient short distance communication shall use higher frequencies, long distance communication shall use lower frequencies (see Fig. 5).

This technology may be useful for xDSL communication, as well.

Every node participating in PLC or DSL communications measures noise on the power line, attenuation and distance to the communication partner.

Here, a short description on how to measure these parameters is given:

- The transmitted signal is known to all modems.
- Transmitting a known signal and measuring this at the receiver side attenuation between two modems can be calculated.
- Snooping on the power line wire locally at the receiver measures the noise.
- With the knowledge of the transmission level, attenuation and noise the available SNR can be calculated.

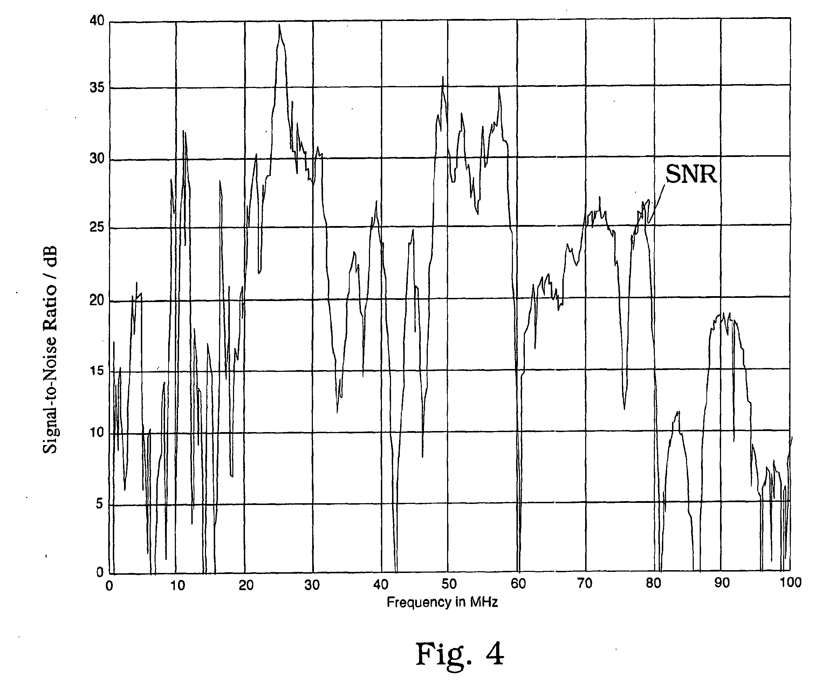

Channel capabilities can be calculated for various possible communication windows of the SNR graph. E.g. possible communication windows can be found in Fig. 4 from 20 MHz to 40MHz, 50 MHz to 60MHz or 60MHz to 80MHz.

The new initiated communication shall be placed to a frequency location where the calculated channel capability fits best to the demanded transmission capability.

PLC or DSL Modems may embed a terrestrial tuner and antenna. Said modems may snoop in the air if there are any radio services and/or radio sources available. If a relevant service and/or source is found at any frequency location the respective frequency band is or shall be omitted in power line or DSL communication. Because due to radiation of the power lines there may be a loss of quality at these services if the identical frequencies are used for PLC or DSL as well.

Next the PLC or DSL modem shall measure the radiation of the power line or DSL channel where it is connected to. One modem sends a well known signal as a reference signal on the power lines or DSL channel and all participating modems receive and/or measure this signal over a wireless channel, in particular with their terrestrial antenna. With this measurement the modems determine the radiation of the power line depending on frequency. The result of this measurements shall be exchanged to all modems, so the frequencies with relevant radiation shall not be used for PLC or DSL, as well.

There are various possibilities to measure the distance between two communication partners:

- Measuring transfer function in frequency domain, calculation of channel impulse response, selecting the main impulse, calculate distance with the help of signal transmission speed and the time of arrival of main impulse
- Measuring Impulse Response in time domain with the help of pn-sequences and calculate distance with the help of the arrival time of the main impulse and of the of signal transmission speed.

If a later starting communication decides to use the same frequency location that was already allocated by an other communication the communication of the shorter distance between the modems shall move to a second "best fit" location at a higher frequency. The communication via the longer distance shall use the spectrum at lower frequencies.

The PLT system shall implement a so called 'Distance Map' that stores the distances between all PLT modems to each other. The 'Distance Map' must be readable from all modems. Arbitration of the frequency allocation shall be done with the help of the distance map.

Additionally, the present invention will be elucidated in more detail taking reference to the accompanying Figures.

| | |
|---|---|
| **Fig. 1, 1A, 1B** | is a schematical block diagram elucidating a preferred embodiment of the inventive method for operating a PLC or DSL modem device. |
| **Fig. 2** | is a schematical block diagram elucidating the basic aspects of the inventive method for operating a PLC or DSL modem device and of an inventive communication arrangement. |
| **Figs. 3 - 5** | described by means of graphical representations of different spectra, several aspects of the present invention. |
| **Figs. 6A, 6B** | schematically describe relevant radiation situations. |

In the following elements and structures which are equivalent or comparable with respect to their function and/or the structure will be indicated by the same reference symbols and their explicit description will not be repeated in each case of their occurrence.

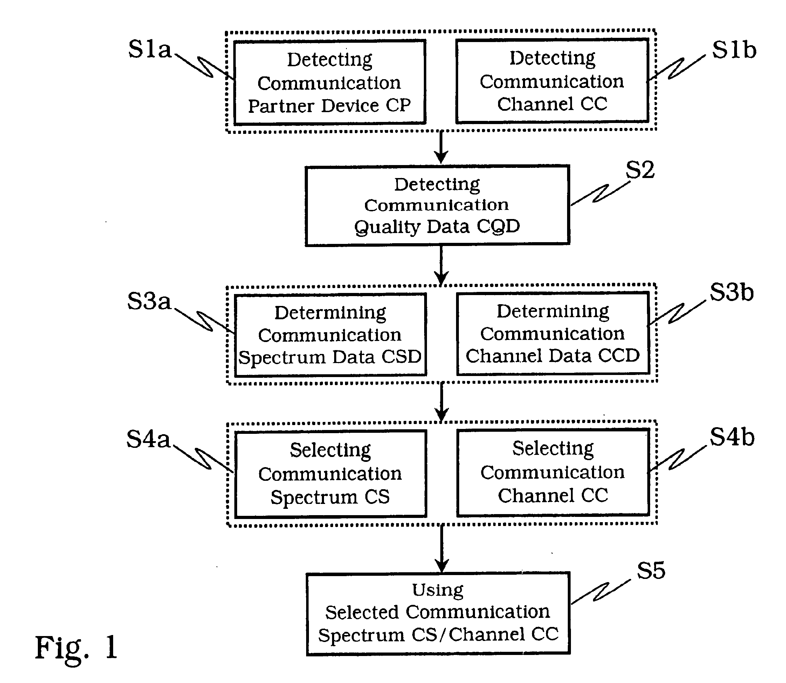

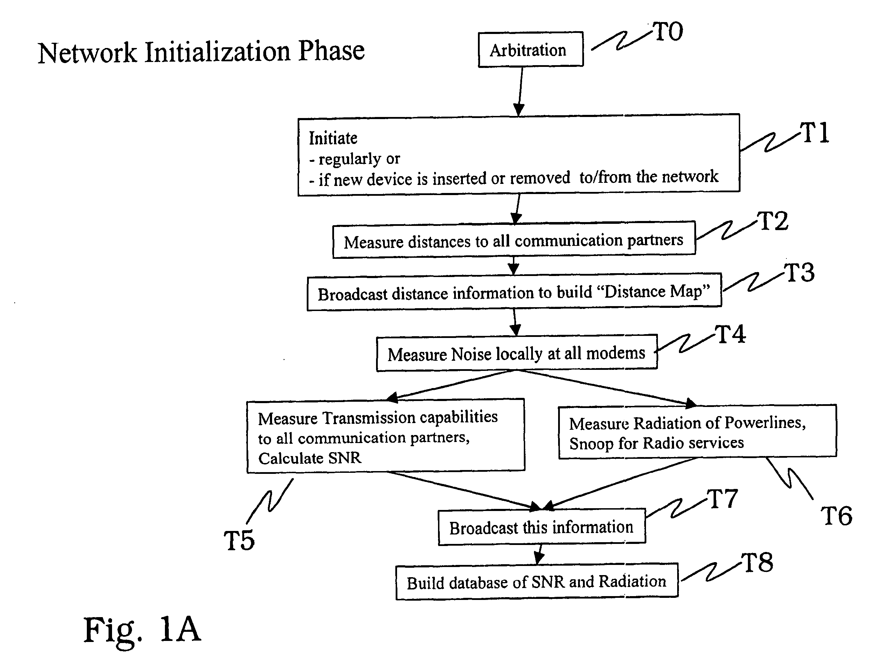

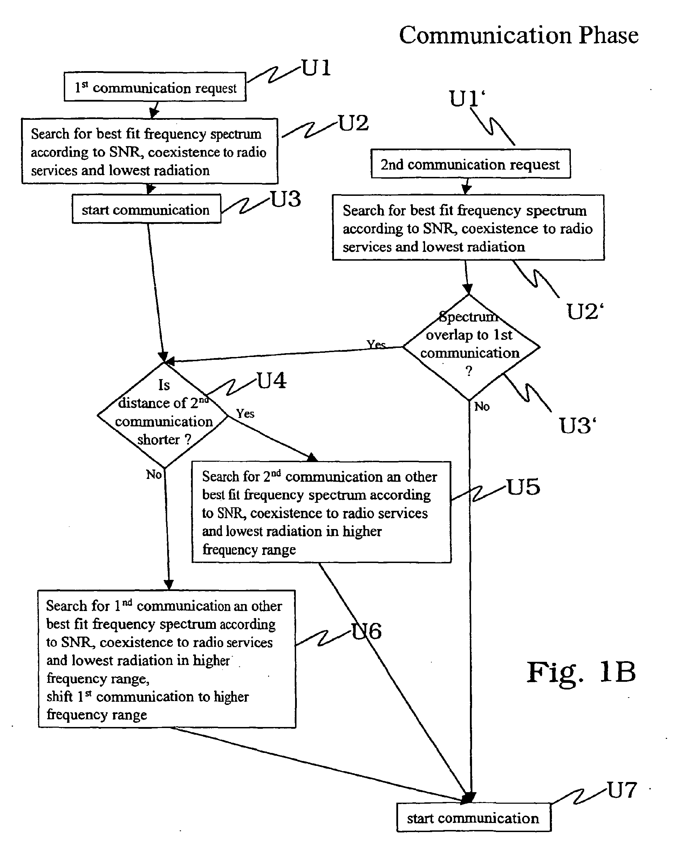

Fig. 1 is a schematical block diagram containing a flow chart for a preferred embodiment of the inventive method for operating a PLC or DSL modem device according to the present invention.

Dearing a first section a step S1a of detecting communication partner devices CP and additionally or alternative a step S1b of detecting communication channels CC are performed. These both steps S1a and S1b may be alternatives, however, they may be also performed both. Thereby information with respect to possible communication partner devices CP and/or possible communication channels CC with respect to said communication partner devices CP can be obtained.

In a following step S2 of a following section of the inventive method for operating a PLC or DSL modem device communication quality data CQD are determined, detected and/or derived on the basis of the information obtained from steps S1a and S1b. This step S2 of detecting communication quality data CQD may comprise detecting processes or measuring processes with respect to signal attenuation, signal transmission level, noise, and/or signal-to-noise-ratio.

In a following section of the inventive method for operating a PLC or DSL modem device a step S3a of determining communication spectrum data CSD and/or a step S3b of determining communication channel data CCD are performed. Both steps S3a and S3b may be performed alternatively or both so as to derive information which is descriptive for the spectra which might be used for future communication processes and/or information with respect to possible applicable communication channels.

Based on the determined communication spectrum data CSD and the communication channel data CCD in a following section a communication spectrum CS and/or a communication channel CC may be selected among the possible communication spectra and/or among the possible communication channels, respectively, by performing respective processing steps S4a and S4b, respectively.

Finally, in a final step S5 the selected communication spectrum CS and/or the respective selected communication channel CC are used for establishing a communication between said PLC or DSL modem device and a selected or given communication partner device CP.

Fig 1A and 1B show in more detail sub-proccess of general scheme shown in Fig. 1, in particular a subprocess during a network initialization phase and a sub-process during a network communication phase, respectively. The respective steps T0 to T8 and U1 to U7 and U1' to U3' of the schemes of Fig. 1A and 1B, respectively are essentially self-explanatory.

Fig. 1A describes a possible network initialization phase comprising a sub-process T0 of arbitration and sub-processeses of measurements and evalution T1 to T8. Finally, the respective communication quality data CQD and the like are available.

Fig. 1B describes the possible communication management of two pairs of PLC or DSL modems 10, PLC. Steps U1 to U3 describe the establishment of the communication of the first pair of PLC or DSL modems, i.e. between a first and a second PLC or DSL modem. Steps U1' and U2' described a communication pre-phase for the second pair of PLC or DSL modems, i.e. between a third and a fourth PLC or DSL modem. Steps U4 to U6 and U3' describe the negotiation between the two pairs to establish an appropriate communication structure which fits best or better.

Fig. 2 demonstrates by means of a schematical block diagram a communication arrangement 1 or communication network 1 to which the inventive method for operating a PLC or DSL modem device or for operating a communication arrangement/network may be applied to.

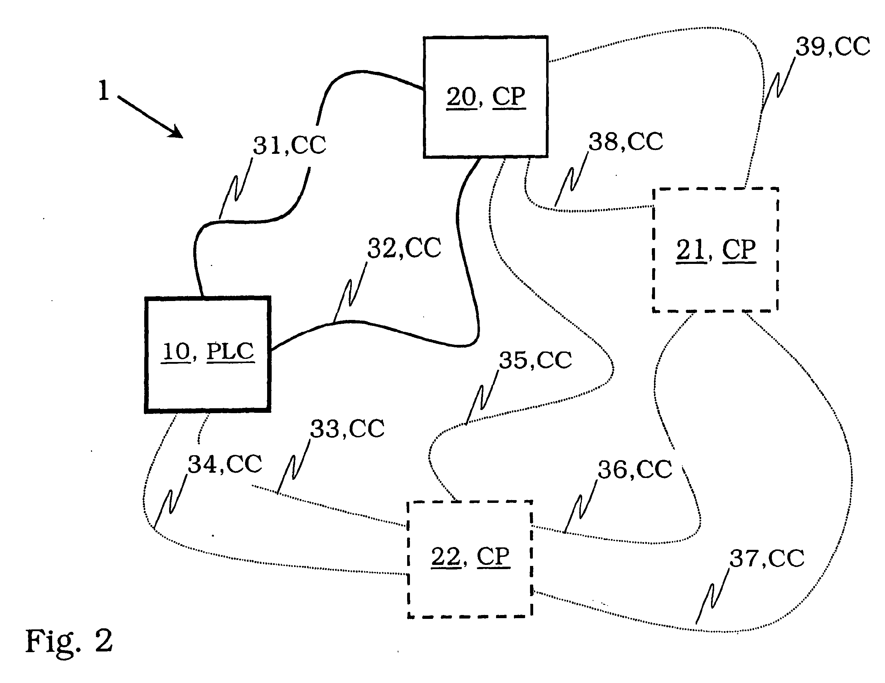

The communication network 1 or communication arrangement 1 of Fig. 2 comprises a power line carrier modem device or PLC or DSL modem device 10, PLC. Additionally said arrangement or network 1 further comprises possible communication partner devices 20, 21, 22, CP. In the case of the embodiment of Fig. 2 the PLC or DSL modem device 10, PLC is connected to said communication partner device 20, CP by communication channels 31, 32, CC. For respective connections between and to the other communication partner devices 21, 22 further communication channels 33 - 39, CC are provided.

When applying the inventive method for operating the PLC or DSL modem device 10, PLC it may first be checked which communication channels are available for communicating to the propriate communication partner device 20, CP. After the respective communication channels 31 und 32 are found respective communication quality data CQD are collected and evaluated on the basis of which respective communication spectrum data CSD as well as communication channel data CCD are derived. Based on the derived communication spectrum data CSD and communication channel data CCD for a next communication to be established between said PLC or DSL modem device 10 and the respective communication partner device 20 a respective channel and a respective spectrum for the communication are selected.

The selection is realized to establish a communication which fits best to the communication, spectrum and channel capabilities of the communication arrangement or communication network 1 at the actual and present status.

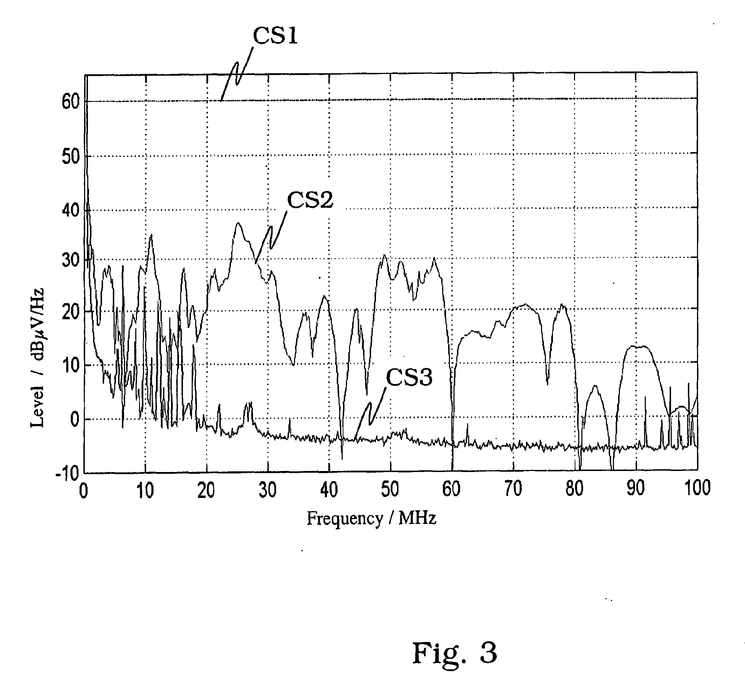

According to preferred embodiments of the inventive method for operating a communication arrangement or a communication network 1 every node and therefore every PLC or DSL modem device is enabled to measure the noise on the respective power line, the attenuation of the signal and the distance to the respective communication partner devices. Fig. 3 demonstrates different measurement results which might occur during the process of operation and during the process of communication.

Fig. 3 is a graphical representation of the signal level as a function of the frequency of the signal. Trace CS1 demonstrates the transmitted signal or reference signal which is known to all nodes participating in the PLC or DSL communication process. The trace indicated by CS2 represents the received signal after transmission and shows a respective and transmission dependent damping with respect to the original signal CS1. Finally, the trace indicated by CS3 demonstrates the local noise obtained during a respective transmission process. As the transmitted signal is known to all nodes and therefore known to all participating PLC or DSL modem devices and the transmitted version of the known signal can be measured at the receiving side or receiver side, the respective attenuation between two participating devices, i.e. the sending PLC or DSL modem device and a receiving communication partner device CP or vice versa can be calculated. Therefore, by snooping on the powerline wire locally the noise at the receiver side can be measured. With the knowledge of the transmission level, the attenuation of the signal and the noise, the available signal-to-noise-ratio can be calculated.

Fig. 4 is a spectral representation of the signal-to-noise-ratio SNR.

The signal to noise ratio SNR may be calculated by using Shannons law

$$SNR := Ptransmit_{[dB\mu V]} - Attenuation_{[dB]} - Noise_{[dB]}.$$

In the case of the situation shown in Fig. 3 and 4 this leads to

$$SNR := CS2 - CS3, \text{ whith } Ptransmit_{[dB\mu V]} = CS1.$$

The respective channel capability C is then

$$C := \int_{f_{Start}}^{f_{Stop}} ld(1 - SNR(f))df,$$

with $f_{Start}$ and $f_{Stop}$ denoting the frequency band's boundaries for the required bandwidth Bw:

$$Bw := f_{Stop} - f_{Start}.$$

In Fig. 4 one can ranges with comparable high values for SNR from 20 MHz to 40 MHz, from 50 MHz to 60 MHz, as well as from 60 MHz to 80 MHz.

Fig. 5 is a spectral representation of the signal attenuation along a communication channel so as to demonstrate the attenuation level as a function of the distance between two communicating devices. In Fig. 5 the trace indicated by CS4 shows the attenuation of the transmitted signal for a long distance channel. The trace indicated by CS5 demonstrates the attenuation level of a medium distance channel. Finally, the trace indicated by CS6 demonstrates the attenuation level from a short distance communication channel.

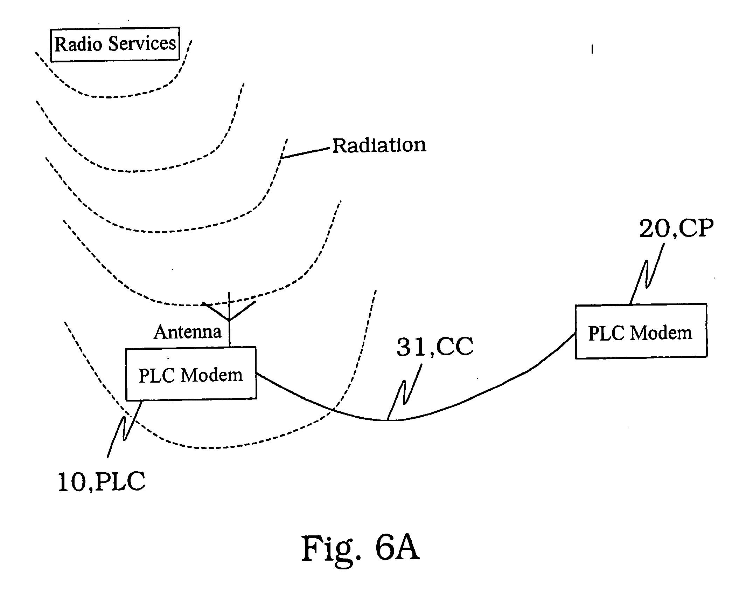

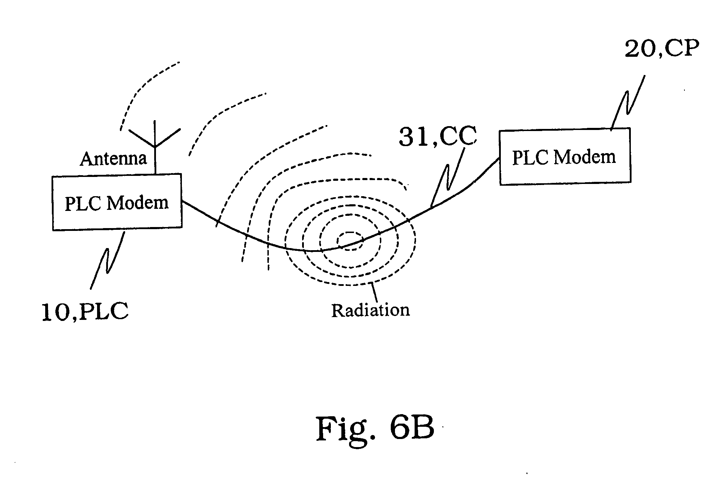

Fig. 6A and 6B demonstrate schematically the radiation situations the present invention can deal with.

In the situation shown in Fig. 6A the PLC or DSL modem device 10, PLC snoops in the air in order to detect external radio services or radio sources of relevance. When establishing communication to the communication partner device 20, CP via a communication channel 31, CC which is a power line or DSL channel the frequencies or spectral ranges of the external radio sources or radio services are avoided or not used in order to avoid interferences to the external radio sources or radio services via radiation coming from the power line and the communication process between the modem devices 10 and 20 and/or from said external radio sources or radio services coming from said external radio sources or radio services via said power line or DSL channel 31, CC.

In the situation shown in Fig. 6B the PLC or DSL modem device 10, PLC snoops in the air in order to detect radiation from the power line or DSL channel 31, CC itself.


**Reference Symbols**


| 1 | communication arrangement, communication network according to the present invention |
|---|---|
| 10 | PLC or DSL modem device, PLC or DSL modem |
| 20 | communication partner device |
| 21 | communication partner device |
| 22 | communication partner device |
| 31 - 39 | communication channel |
| CC | communication channel |
| CCD | communication channel data |
| CP | communication partner device |
| CQD | communication quality data |
| CSD | communication spectrum data |
| CS | communication spectrum |
| PLC | PLC or DSL modem device, PLC or DSL modem |


**Claims**

1.  Method for operating a PLC or DSL modem device comprising:

- a step (S2) of generating and/or providing communication quality data (CQD) with respect to at least one communication channel (31, 32, CC) between said PLC or DSL modem device (10, PLC) and at least one communication partner device (20, CP), said communication quality data (CQD) being descriptive at least for communication capabilities, a communication quality and/or for communication features at least of said at least one communication partner device (20, CP) and/or of said at least one communication channel (31, 32, CC),
- a step (S3a, S3b) of determining at least communication spectrum data (CSD) and/or communication channel data (CCD) based on said communication quality data (CQD) and being descriptive for at least one communication spectrum (CS) for said PLC or DSL modem device (10, PLC) and/or for said at least one communication channel (31, 32, CC) each of which determined data is determined with respect to said at least one communication partner device (20, CP).
- a step (S4a, S4b) of determining and/or selecting a communication spectrum (CS) and/or a communication channel (31, 32 CC) from said at least one communication channel (31, 32, CC) each of which determining and/or selecting is based on said communication spectrum data (CSD) and/or on said communication channel data (CCD), and
- a step of communicating with said at least one communication partner device (20, CP) via said selected communication channel (31, 32, CC) and/or said selected communication spectrum (CS).

**characterized in that**

a process of checking the presence, existence and/or activity of other and external radio sources and/or radio services is performed by snooping in the air of said PLC or DSL modem devices by means of a separate antenna device to detect if there are any radio services and/or radio sources available, wherein, if a relevant service and/or source is found at any frequency location- the respective frequency band is omitted in PLC or DSL communication.

**2.** Method according to claim 1,
further comprising:

- a step (S1a) of detecting at least one communication partner device (20, CP), which is connected to said PLC or DSL modem device (10, PCL) via at least one communication channel (31, 32, CC) and/or
- a step (S1b) of detecting said at least one communication channel (31, 32, CC) between said PLC or DSL modem device (10, PLC) and at least one communication partner device (20, CP).

**3.** Method according to any one of the preceding claims,
wherein said step (S2) of generating and/or providing communication quality data (CQD) comprises a process of determining and/or measuring noise of said at least one communication channel (31, 32, CC).

**4.** Method according to any one of the preceding claims,
wherein said step (S2) of generating and/or providing communication quality data (CQD) comprises a process of determining and/or measuring a signal attenuation of said at least one communication channel (31, 32, CC).

**5.** Method according to any one of the preceding claims,
wherein said step (S2) of generating and/or providing communication quality data (CQD) comprises a process of determining and/or measuring a signal transmission level of said at least one communication channel (31, 32, CC).

**6.** Method according to any one of the preceding claims,
wherein said step (S2) of generating and/or providing communication quality data (CQD) comprises a process of determining and/or measuring a distance of said PLC or DSL modem device (10, PLC) to said communication partner device (20, CP) with respect to said at least one communication channel (31, 32, CC).

**7.** Method according to any one of the preceding claims,
wherein said step (S2) of generating and/or providing communication quality data (CQD) comprises a process of determining and/or measuring a signal-to-noise ratio with respect to said at least one communication channel (31, 32, CC).

**8.** Method according to any one of the preceding claims,
wherein for said at least one communication partner device (20, CP) a plurality of communication channels (31, 32, CC) are analysed.

**9.** Method according to any one of the preceding claims,
wherein a communication spectrum (CS) and/or a communication channel (31, 32, CC) are selected and/or used which are not simultaneously used by communication processes of and/or between other communication partner devices (21, 22) within said communication network (1) or communication arrangement (1).

**10.** Method according to any one of the preceding claims,
wherein for a communication channel (31, 32, CC) having or realizing a larger communication distance between said PLC or DSL modem device (10, PLC) and said selected communication partner device (20, CP) a lower frequency range is chosen for said communication spectrum (CS).

**11.** Method according to any one of the preceding claims,
wherein for a communication channel (31, 32, CC) having or realizing a shorter communication distance between said PLC or DSL modem device (10, PLC) and said selected communication partner device (20, CP) a communication spectrum (CS) with a higher frequency range is chosen.

**12.** Method according to claim 1,
wherein said step of snooping is performed with a terrestrial tuner device and/or a separate antenna device, for receiving radio sources and/or radio services.

**13.** Method according to any one of the preceding claims 1 to 12, wherein within a communication arrangement, which comprises a plurality of PLC or DSL modem devices (10, 20, 21. 22), said method is used for each of said plurality of PLC or DSL modem devices (10, 20, 21, 22).

**14.** Method according to claim 13.

- wherein a pre-defined reference signal is generated by at least one PLC or DSL modem device (10, PLC) and transmitted via at least one available communication channel (31, 32, CC),
- wherein possible communication partner devices (20, CP) measure said pre-defined reference signal via said at least one available communication channel (31, 32, CC) and/or analyse the respective measurement data,
- wherein based on said measurements said communication quality data (CQD), said communication spectrum data (CSD), said communication channel data (CCD), said communication spectrum (CS) and/or said communication channel (31, 32, CC) are chosen or selected.

**15.** Method according to any one of the preceding claims 13 to 14,

- wherein a pre-defined reference signal is generated by at least one PLC or DSL modem device (10, PLC) and transmitted via at least one available communication channel (31, 32, CC),
- wherein possible communication partner devices (20, CP) measure said pre-defined reference signal via channels other than said available communication channels (31, 32, CC) and/or analyse the respective measurement data,
- wherein based on said measurements said communication quality data (CQD), said communication spectrum data (CSD), said communication channel data (CCD), said communication spectrum (CS) and/or said communication channel (31, 32, CC) are chosen or selected.

**16.** Method according to any one of the preceding claims 13 to 15,

- wherein said PLC or DSL modem device measures the radiation of the power line or DSL channel where it is connected to,
- wherein one modem device sends a well known signal as a reference signal on the power lines or DSL channels and all participating modems receive and/or measure this signal over a wireless channel,
- wherein with this measurement the modem devices determine the radiation of the power line or DSL channel depending on frequency, and
- wherein the result of this measurements is exchanged to all modem devices in order to not use or to avoid the frequencies or spectral ranges with respect to the relevant radiation for PLC or DSL communication.

**17.** Method according to any one of the preceding claims 13 to 16, wherein said at least one PLC or DSL modem device (10, PLC) and/or said possible communication partner devices (20, CP) communicate and/or transmit the respective measurement data, its respective analysis results, said communication quality data (CQD), said communication spectrum data (CSD), said communication channel data (CCD), said communication spectrum (CS) and/or said communication channel (31, 32, CC) to said possible communication partner devices (20, CP) and/or said at least one PLC or DSL modem device (10, PLC),

**18.** Method according to any one of the preceding claims 13 to 17, wherein said processes of generating, of transmitting said pre-defined reference signal, of measuring, of analysing the measurement, and/or of communicating the respective data to said possible communication partner devices (20, CP) and/or said at least one PLC or DSL modem device (10, PLC) are performed during said step (S2) of generating and/or providing communication quality data (CQD), within said step (S3a, S3b) of determining at least communication spectrum data (CSD) and/or communication channel data (CCD), and/or within said step (S4a, S4b) of determining and/or selecting a communication spectrum (CS) and/or a communication channel (31, 32, CC),

**19.** PLC or DSL modem device, comprising means for

- generating and/or providing communication quality data (CQD) with respect to at least one communication channel (31, 32. CC) between said PLC or DSL modem device (10. PLC) and at least one communication partner device (20, CP), said communication quality data (CQD) being descriptive at least for communication capabilities, a communication quality and/or for communication features at least of said at least one communication partner device (20. CP) and/or of said at least one communication channel (31, 32, CC).
- determining at least communication spectrum data (CSD) and/or communication channel data (CCD) based on said communication quality data (CQD) and being descriptive for at least one communication spectrum (CS) for said PLC or DSL modem device (10, PLC) and/or or said at least one communication channel (31, 32, CC) each of which determined data is determined with respect to said at least one communication partner device (20, CP),

- determining and/or selecting a communication spectrum (CS) and/or a communication channel (31, 32, CC) from said at least one communication channel (31, 32, CC) each of which determining and/or selecting is based on said communication spectrum data (CSD) and/or on said communication channel data (CCD), and
- communicating with said at least one communication partner device (20, CP) via said selected communication channel (31, 32, CC) and/or said selected communication spectrum (CS),

**characterized by**
a separate antenna device for checking the presence, existence and/or activity of other and external radio sources and/or radio services by snooping in the air of said PLC or DSL modem device to detect if there are any radio services and/or radio sources available, wherein, if a relevant service and/or source is found at any frequency location- the respective frequency band is omitted in PLC or DSL communication.

20. PLC or DSL modem device according to claim 19, further comprising:

   a terrestrial tuner device for receiving radio sources and/or radio services.

21. Communication arrangement,

   - which comprises a plurality of PLC or DSL modem devices (10, 20, 21, 22), each of said plurality of PLC or DSL modem devices (10, 20, 21, 22) including:

      means for

         - generating and/or providing communication quality data (CQD) with respect to at least one communication channel (31, 32, CC) between said PLC or DSL modem device (10, PLC) and at least one communication partner device (20, CP), said communication quality data (CQD) being descriptive at least for communication capabilities, a communication quality and/or for communication features at least of said at least one communication partner device (20, CP) and/or of said at least one communication channel (31, 32, CC).
         - determining at least communication spectrum data (CSD) and/or communication channel data (CCD) based on said communication quality data (CQD) and being descriptive for at least one communication spectrum (CS) for said PLC or DSL modem device (10, PLC) and/or for said at least one communication channel (31, 32, CC) each of which determined data is determined with respect to said at least one communication partner device (20, CP).
         - determining and/or selecting a communication spectrum (CS) and/or a communication channel (31, 32, CC) from said at least one communication channel (31, 32, CC) each of which determining and/or selecting is based on said communication spectrum data (CSD) and/or on said communication channel data (CCD), and
         - communicating with said at least one communication partner device (20, CP) via said selected communication channel (31, 32, CC) and/or said selected communication spectrum (CS).

   **characterized by**
   a separate antenna device for checking the presence, existence and/or activity of other and external radio sources and/or radio services by snooping in the air of said PLC or DSL modem device to detect if there are any radio services and/or radio sources available, wherein, if a relevant service and/or source is found at any frequency location- the respective frequency band is omitted in PLC or DSL communication.

22. Communication arrangement according to claim 21, wherein said PLC or DSL modem devices further include:

   a terrestrial tuner device for receiving radio sources and/or radio services.

23. Computer program, for performing the method according to any one of the claims 1 to 18, when it is executed on a computer, or a digital signal processing means.

24. Computer readable storage medium, carrying a computer program according to claim 23.

**Patentansprüche**

1. Verfahren zum Betreiben einer PLC- oder DSL-Modemeinrichtung, mit:

   - einem Schritt (S2) zum Erzeugen und/oder Bereitstellen von Kommunikationsqualitätsdaten (CQD) in Bezug auf mindestens einen Kommunikationskanal (31, 32. CC) zwischen der PLC- oder DSL-Modemeinrichtung (10, PLC) und mindestens einer Kommunikationspartnereinrichtung (20, CP), wobei die Kommunikationsqualitätsdaten (CQD) beschreibend sind zumindest für die Kommunikationsmöglichkeiten, eine Kommunikationsqualität und/oder für Kommunikationsmerkmale der zumindest einen Kommunikationspartnereinrichtung (20, CP) und/ oder des mindestens einen Kommunikationskanals (21, 22, CC),
   - einem Schritt (S3a, S3b) des Bestimmens zumindest von Kommunikationsspektrumsdaten (CSD) und/oder von Kommunikationskanaldaten (CCD) auf der Grundlage der Kommunikationsqualitätsdaten (CQD), welche beschreibend sind für zumindest ein Kommunikationsspektrum (CS) der PLC- oder DSL-Modemeinrichtung (10, PLC) und/oder für den mindestens einen Kommunikationskanal (31, 32, CC), wobei die jeweils bestimmten Daten bestimmt sind in Bezug auf die mindestens eine Kommunikationspartnereinrichtung (20, CP),
   - einem Schritt (S4a, S4b) des Bestimmens und/oder Auswählens eines Kommunikationsspektrums (CS) und/ oder eines Kommunikationskanals (31, 32, CC) aus dem mindestens einen Kommunikationskanal (31, 32, CC), wobei das jeweilige Bestimmen und/oder Auswählen auf den Kommunikationsspektrumsdaten (CSD) und/oder den Kommunikationskanaldaten (CCD) basiert, und
   - einem Schritt des Kommunizierens mit der mindestens einen Kommunikationspartnereinrichtung (20, CP) über den ausgewählten Kommunikationskanal (31, 32, CC) und/oder mittels des ausgewählten Kommunikationsspektrums (CS),

   **dadurch gekennzeichnet,**
   **dass** ein Vorgang des Prüfens der Anwesenheit, der Existenz und/oder der Aktivität anderer und externer Radioquellen und/oder Radiodienste ausgeführt wird, und zwar durch Abhorchen der PLC- oder DSL-Modemeinrichtungen über die Luft mittels einer separaten Antenneneinrichtung, um zu detektieren, ob andere Radiodienste und/oder Radioquellen verfügbar sind, wobei, falls ein relevanter Dienst und/oder eine relevante Quelle an irgendeiner Frequenzposition gefunden werden, das jeweilige Frequenzband in der PLC- oder DSL-Kommunikation ausgelassen wird.

2. Verfahren nach Anspruch 1, mit:

   - einem Schritt (S1a) des Bestimmens mindestens einer Kommunikationspartnereinrichtung (20, CP), welche mit der PLC- oder DSL-Modemeinrichtung (10, PLC) über mindestens einen Kommunikationskanal (31, 32, CC) verbunden ist, und/oder
   - einem Schritt (S1b) des Detektierens mindestens eines Kommunikationskanals (31, 32, CC) zwischen der PLC- oder DSL-Modemeinrichtung (10, PLC) und mindestens einer Kommunikationspartnereinrichtung (20, CP).

3. Verfahren nach einem der vorangehenden Ansprüche,
   bei welchem der Schritt (S2) des Erzeugens und/oder Bereitstellens der Kommunikationsqualitätsdaten (CQD) einen Prozess aufweist des Bestimmens und/oder Messens von Rauschen oder Störsignalen des mindestens einen Kommunikationskanals (31, 32, CC).

4. Verfahren nach einem der vorangehenden Ansprüche,
   bei welchem der Schritt (S2) des Erzeugens und/oder Bereitstellens der Kommunikationsqualitätsdaten (CQD) einen Prozess aufweist des Bestimmens und/oder Messens einer Signalabschwächung des mindestens einen Kommunikationskanals (31, 32, CC).

5. Verfahren nach einem der vorangehenden Ansprüche,
   bei welchem der Schritt (S2) des Erzeugens und/oder Bereitstellens der Kommunikationsqualitätsdaten (CQD) einen Prozess aufweist des Bestimmens und/oder Messens eines Signalübertragungspegels des mindestens einen Kommunikationskanals (31, 32, CC).

6. Verfahren nach einem der vorangehenden Ansprüche,
   bei welchem der Schritt (S2) des Erzeugens und/oder Bereitstellens der Kommunikationsqualitätsdaten (CQD) einen Prozess aufweist des Bestimmens und/oder Messens einer Distanz der PLC- oder DSL-Modemeinrichtung (10, PLC) zur Kommunikationspartnereinrichtung (20, CP) in Bezug auf den mindestens einen Kommunikationskanal (31, 32, CC).

7. Verfahren nach einem der vorangehenden Ansprüche,
bei welchem der Schritt (S2) des Erzeugens und/oder Bereitstellens der Kommunikationsqualitätsdaten (CQD) einen Prozess aufweist des Bestimmens und/oder Messens eines Signal-zu-Rausch-Verhältnisses in Bezug auf den mindestens einen Kommunikationskanal (31, 32, CC).

8. Verfahren nach einem der vorangehenden Ansprüche,
bei welchem für die mindestens eine Kommunikationspartnereinrichtung (20, CP) eine Mehrzahl Kommunikationskanäle (31, 32, CC) analysiert wird.

9. Verfahren nach einem der vorangehenden Ansprüche,
bei welchem ein Kommunikationsspektrum (CS) und/oder ein Kommunikationskanal (31, 32, CC) ausgewählt und/oder verwendet werden, die nicht gleichzeitig verwendet werden von Kommunikationsvorgängen anderer und/oder zwischen anderen Kommunikationspartnereinrichtungen (21, 22) innerhalb des Kommunikationsnetzwerks (1) oder der Kommunikationsanordnung (1).

10. Verfahren nach einem der vorangehenden Ansprüche,
bei welchem für einen Kommunikationskanal (31, 32, CC), welcher eine größere Kommunikationsdistanz zwischen der PLC- oder DSL-Modemeinrichtung (10, PLC) und der ausgebildeten Kommunikationspartnereinrichtung (20, CP) aufweist oder realisiert, für das Kommunikationsspektrum (CS) ein niedrigerer Frequenzbereich gewählt wird.

11. Verfahren nach einem der vorangehenden Ansprüche,
bei welchem für einen Kommunikationskanal (31, 32, CC), welcher eine geringere Kommunikationsdistanz zwischen der PLC- oder DSL-Modemeinrichtung (10. PLC) und der ausgebildeten Kommunikationspartnereinrichtung (20, CP) aufweist oder realisiert, für das Kommunikationsspektrum (CS) ein höherer Frequenzbereich gewählt wird.

12. Verfahren nach Anspruch 1.
bei welchem der Schritt des Abhörens durchgeführt wird mittels einer terrestrischen Tunereinrichtung und/oder mittels einer separaten Antenneneinrichtung zum Empfangen der Radioquellen und/oder der Radiodienste.

13. Verfahren nach einem der vorangehenden Ansprüche,
bei welchem innerhalb einer Kommunikationsanordnung, welche eine Mehrzahl PLC- oder DSL-Modemeinrichtungen (10, 20, 21, 22) aufweist, das Verfahren für jedes der PLC- oder DSL-Modemeinrichtungen (10, 20, 21, 22) verwendet wird.

14. Verfahren nach Anspruch 13,

- bei welchem ein vorgegebenes Bezugssignal durch mindestens eine PLC- oder DSL-Modemeinrichtung (10, PLC) erzeugt und über mindestens einen verfügbaren Kommunikationskanal (31, 32, CC) übertragen wird,
- wobei die möglichen Kommunikationspartnereinrichtungen (20, CP) das vorbestimmte Bezugssignal über mindestens einen verfügbaren Kommunikationskanal (31, 32, CC) messen und/oder die jeweiligen Messdaten analysieren, und
- wobei auf der Grundlage der Messungen ermittelt und/oder ausgewählt werden die Kommunikationsqualitätsdaten (CQD), die Kommunikationsspektrumsdaten (CSD), die Kommunikationskanaldaten (CCD), das Kommunikationsspektrum (CS) und/oder der Kommunikationskanal (31, 32, CC).

15. Verfahren nach einem der vorangehenden Ansprüche 13 bis 14,

- bei welchem ein vorgegebenes Bezugssignal durch mindestens eine PLC- oder DSL-Modemeinrichtung (10, PLC) erzeugt und über mindestens einen verfügbaren Kommunikationskanal (31, 32, CC) übertragen wird,
- wobei die möglichen Kommunikationspartnereinrichtungen (20, CP) das vorbestimmte Bezugssignal über andere Kanäle als den verfügbaren Kommunikationskanal (31, 32, CC) messen und/oder die jeweiligen Messdaten analysieren, und
- wobei auf der Grundlage der Messungen ermittelt und/oder ausgewählt werden die Kommunikationsqualitätsdaten (CQD), die Kommunikationsspektrumsdaten (CSD), die Kommunikationskanaldaten (CCD), das Kommunikationsspektrum (CS) und/oder der Kommunikationskanal (31, 32, CC).

16. Verfahren nach einem der vorangehenden Ansprüche 13 bis 15,

  - bei welchem die PLC- oder DSL-Modemeinrichtung die Strahlung der Stromleitung oder des DSL-Kanals misst, während es damit verbunden ist,
  - bei welchem eine Modemeinrichtung ein wohlbekanntes Signal als Bezugssignal auf die Stromleitungen oder die DSL-Kanäle aussendet und alle teilnehmenden Modemeinrichtungen dieses Signal empfangen und/oder löschen und zwar über einen drahtlosen Kanal,
  - wobei mittels der Messung die Modemeinrichtungen die Strahlung der Stromleitung oder des DSL-Kanals in Abhängigkeit der Frequenz ermitteln und
  - wobei das Ergebnis dieser Messungen mit allen Modemeinrichtungen ausgetauscht wird, damit in Bezug auf die relevante Strahlung die Frequenzen oder spektralen Bereiche für die PLC- oder DSL-Kommunikation nicht verwendet oder vermieden werden.

17. Verfahren nach einem der Ansprüche 13 bis 16, wobei zumindest eine PLC- oder DSL-Modemeinrichtung (10, PLC) und/oder die möglichen Kommunikationspartnereinrichtungen (20, CP) die jeweiligen Messdaten, die jeweiligen Analyseergebnisse, die Kommunikationsqualitätsdaten (CQD), die Kommunikationsspektrumsdaten (CSD), die Kommunikationskanaldaten (CCD) das Kommunikationsspektrum (CS) und/oder den Kommunikationskanal (31, 32, CC) an die möglichen Kommunikationspartnereinrichtungen (20, CP) und/oder an die mindestens eine PLC- oder DSL-Modemeinrichtung (10, PLC) kommunizieren und/oder übertragen.

18. Verfahren nach einem der vorangehenden Ansprüche 13 bis 17, bei welchem der Vorgang des Erzeugens, des Übertragens des vorbestimmten Bezugssignals, des Messens, des Analysierens der Messung und/oder des Kommunizierens der jeweiligen Daten zu den möglichen Kommunikationspartnereinrichtungen (20, CP) und/oder zu der mindestens einen PLC- oder DSL-Modemeinrichtung (10, PLC) ausgeführt werden während des Schritts (S2) des Erzeugens und/oder Bereitstellens der Kommunikationsqualitätsdaten (CQD) innerhalb des Schritts (S3a, S3b) des Bestimmen zumindest der Kommunikationsspektrumsdaten (CSD) und/oder der Kommunikationskanaldaten (CCD) und/oder innerhalb des Schritts (S4a, S4b) des Bestehens und/oder des Auswählens eines Kommunikationsspektrums (CS) und/oder innerhalb eines Kommunikationskanals (31, 32, CC).

19. PLC- oder DSL-Modemeinrichtung, mit:

  - einer Einrichtung zum Erzeugen und/oder Bereitstellen von Kommunikationsqualitätsdaten (CQD) in Bezug auf mindestens einen Kommunikationskanal (31, 32, CC) zwischen der PLC- oder DSL-Modemeinrichtung (10, PLC) und mindestens einer Kommunikationspartnereinrichtung (20, CP), wobei die Kommunikationsqualitätsdaten (CQD) beschreibend sind zumindest für die Kommunikationsmöglichkeiten, einer Kommunikationsqualität und/oder für Kommunikationsmerkmale zumindest einer Kommunikationspartnereinrichtung (20, CP) und/oder mindestens eines Kommunikationskanals (21, 22, CC),
  - einer Einrichtung des Bestimmens zumindest von Kommunikationsspektrumsdaten (CSD) und/oder von Kommunikationskanaldaten (CCD) auf der Grundlage der Kommunikationsqualitätsdaten (CQD), welche beschreibend sind für zumindest ein Kommunikationsspektrum (CS) der PLC- oder DSL-Modemeinrichtung (10, PLC) und/oder für den mindestens einen Kommunikationskanal (31, 32, CC), wobei die jeweils bestimmten Daten bestimmt sind in Bezug auf die mindestens eine Kommunikationspartnereinrichtung (20, CP),
  - einer Einrichtung zum Bestimmen und/oder Auswählen eines Kommunikationsspektrums (CS) und/oder eines Kommunikationskanals (31, 32, CC) aus dem mindestens einen Kommunikationskanal (31, 32, CC), wobei das jeweilige Bestimmen und/oder Auswählen auf den Kommunikationsspektrumsdaten (CSD) und/oder den Kommunikationskanaldaten (CCD) basiert, und
  - einer Einrichtung zum Kommunizieren mit der mindestens einen Kommunikationspartnereinrichtung (20, CP) über den ausgewählten Kommunikationskanal (31, 32, CC) und/oder mittels des ausgewählten Kommunikationsspektrums (CS),

  **gekennzeichnet durch**
  eine separate Antenneneinrichtung zum Prüfen der Anwesenheit, der Existenz und/oder der Aktivität anderer und externer Radioquellen und/oder Radiodienste, und zwar **durch** Abhorchen der PLC- oder DSL-Modemeinrichtungen über die Luft, um zu detektieren, ob andere Radiodienste und/oder Radioquellen verfügbar sind, wobei, falls ein relevanter Dienst und/oder eine relevante Quelle an irgendeiner Frequenzposition gefunden werden, das jeweilige Frequenzband in der PLC- oder DSL-Kommunikation ausgelassen wird.

20. PLC- oder DSL-Modemeinrichtung nach Anspruch 19.
bei welcher des Weiteren vorgesehen ist eine terrestrische Tunereinrichtung zum Empfangen von Radioquellen und/oder von Radiodiensten.

21. Kommunikationsanordnung,
welche aufweist eine Mehrzahl PLC- oder DSL-Modemeinrichtungen (10, 20, 21, 22), wobei jede der Mehrzahl PLC- oder DSL-Modemeinrichtungen (10, 20, 21, 22) aufweist:

- eine Einrichtung zum Erzeugen und/oder Bereitstellen von Kommunikationsqualitätsdaten (CQD) in Bezug auf mindestens einen Kommunikationskanal (31, 32, CC) zwischen der PLC- oder DSL-Modemeinrichtung (10, PLC) und mindestens einer Kommunikationspartnereinrichtung (20, CP), wobei die Kommunikationsqualitätsdaten (CQD) beschreibend sind zumindest für die Kommunikationsmöglichkeiten, eine Kommunikationsqualität und/oder für Kommunikationsmerkmale der zumindest einen Kommunikationspartnereinrichtung (20, CP) und/oder des mindestens einen Kommunikationskanals (21, 22, CC),
- eine Einrichtung des Bestimmens zumindest von Kommunikationsspektrumsdaten (CSD) und/oder von Kommunikationskanaldaten (CCD) auf der Grundlage der Kommunikationsqualitätsdaten (CQD), welche beschreibend sind für zumindest ein Kommunikationsspektrum (CS) der PLC- oder DSL-Modemeinrichtung (10, PLC) und/oder für den mindestens einen Kommunikationskanal (31, 32, CC), wobei die jeweils bestimmten Daten bestimmt sind in Bezug auf die mindestens eine Kommunikationspartnereinrichtung (20, CP),
- eine Einrichtung des Bestimmens und/oder Auswählens eines Kommunikationsspektrums (CS), und/oder eines Kommunikationskanals (31, 32, CC) aus dem mindestens einen Kommunikationskanal (31, 32, CC), wobei das jeweilige Bestimmen und/oder Auswählen auf den Kommunikationsspektrumsdaten (CSD) und/oder den Kommunikationskanaldaten (CCD) basiert, und
- eine Einrichtung des Kommunizierens mit der mindestens einen Kommunikationspartnereinrichtung (20, CP) über den ausgewählten Kommunikationskanal (31, 32, CC) und/oder mittels des ausgewählten Kommunikationsspektrums (CS),

**gekennzeichnet durch**
eine separate Antenneneinrichtung zum Prüfen der Anwesenheit, der Existenz und/oder der Aktivität anderer und externer Radioquellen und/oder Radiodienste, und zwar **durch** Abhorchen der PLC- oder DSL-Modemeinrichtungen über die Luft, um zu detektieren, ob andere Radiodienste und/oder Radioquellen verfügbar sind, wobei, falls ein relevanter Dienst und/oder eine relevante Quelle an irgendeiner Frequenzposition gefunden werden, das jeweilige Frequenzband in der PLC- oder DSL-Kommunikation ausgelassen wird.

22. Kommunikationsanordnung nach Anspruch 21,
bei welcher die PLC- oder DSL-Modemeinrichtungen des Weiteren eine terrestrische Tunereinrichtung aufweisen zum Empfangen von Radioquellen und/oder von Radiodiensten.

23. Computerprogramm zum Ausbilden eines Verfahrens nach einem der Ansprüche 1 bis 18, wenn dieses auf einem Computer oder einer digitalen Signalverarbeitungseinrichtung ausgeführt wird.

24. Computerlesbares Speichermedium,
welches ein Computerprogramm nach Anspruch 23 trägt.

**Revendications**

1. Procédé destiné à faire fonctionner un dispositif de modem CPL ou DSL comprenant :

- une étape (S2) consistant à générer et/ou à fournir des données de qualité de communication (CQD) par rapport à au moins un canal de communication (31, 32, CC) entre ledit dispositif de modem CPL ou DSL (10, CPL) et au moins un dispositif partenaire de communication (20, CP), lesdites données de qualité de communication (CQD) décrivant au moins des capacités de communication, une qualité de communication et/ou des caractéristiques de communication au moins dudit au moins un dispositif partenaire de communication (20, CP) et/ou dudit au moins un canal de communication (31, 32, CC),
- une étape (S3a, S3b) consistant à déterminer au moins des données de spectre de communication (CSD) et/ou des données de canal de communication (CCD) basées sur lesdites données de qualité de communication (CQD) et décrivant au moins un spectre de communication (CS) pour ledit dispositif de modem CPL ou DSL (10, CPL) et/ou ledit au moins un canal de communication (31, 32, CC), chacune de ces données déterminées est déterminée par rapport audit au moins un dispositif partenaire de communication (20, CP),

- une étape (S4a, S4b) consistant à déterminer et/ou à sélectionner un spectre de communication (CS) et/ou un canal de communication (31, 32, CC) parmi ledit au moins un canal de communication (31, 32, CC), chacune de cette détermination et/ou de cette sélection est basée sur lesdites données de spectre de communication (CSD) et/ou sur lesdites données de canal de communication (CCD), et

- une étape consistant à communiquer avec ledit au moins un dispositif partenaire de communication (20, CP) via ledit canal de communication sélectionné (31, 32, CC) et/ou ledit spectre de communication sélectionné (CS),

**caractérisé en ce que**
un procédé consistant à vérifier la présence, l'existence et/ou l'activité d'autres sources radio et/ou services de radio externes est effectué en espionnant dans l'air lesdits dispositifs de modem CPL ou DSL au moyen d'un dispositif d'antenne distinct pour détecter s'il y a des services de radio et/ou des sources radio disponibles, dans lequel, si un service pertinent est découvert et/ou une source pertinente est découverte au niveau de n'importe quel emplacement de fréquence, la bande de fréquences respective est omise dans une communication CPL ou DSL.

2. Procédé selon la revendication 1,
comprenant en outre :

- une étape (S1a) consistant à détecter au moins un dispositif partenaire de communication (20, CP), qui est connecté audit dispositif de modem CPL ou DSL (10, CPL) via au moins un canal de communication (31, 32, CC) et/ou
- une étape (S1b) consistant à détecter ledit au moins un canal de communication (31, 32, CC) entre ledit dispositif de modem CPL ou DSL (10, CPL) et au moins un dispositif partenaire de communication (20, CP).

3. Procédé selon l'une quelconque des revendications précédentes,
dans lequel ladite étape (S2) consistant à générer et/ou à fournir des données de qualité de communication (CQD) comprend un procédé consistant à déterminer et/ou à mesurer le bruit dudit au moins un canal de communication (31, 32, CC).

4. Procédé selon l'une quelconque des revendications précédentes,
dans lequel ladite étape (S2) consistant à générer et/ou à fournir des données de qualité de communication (CQD) comprend un procédé consistant à déterminer et/ou à mesurer un affaiblissement du signal dudit au moins un canal de communication (31, 32, CC).

5. Procédé selon l'une quelconque des revendications précédentes,
dans lequel ladite étape (52) consistant à générer et/ou à fournir des données de qualité de communication (CQD) comprend un procédé consistant à déterminer et/ou à mesurer un niveau de transmission de signal dudit au moins un canal de communication (31, 32, CC).

6. Procédé selon l'une quelconque des revendications précédentes,
dans lequel ladite étape (S2) consistant à générer et/ou à fournir des données de qualité de communication (CQD) comprend un procédé consistant à déterminer et/ou à mesurer une distance dudit dispositif de modem CPL ou DSL (10, CPL) jusqu'audit dispositif partenaire de communication (20, CP) par rapport audit au moins un canal de communication (31, 32, CC).

7. Procédé selon l'une quelconque des revendications précédentes,
dans lequel ladite étape (S2) consistant à générer et/ou à fournir des données de qualité de communication (CQD) comprend un procédé consistant à déterminer et/ou à mesurer un rapport signal sur bruit par rapport audit au moins un canal de communication (31, 32, CC).

8. Procédé selon l'une quelconque des revendications précédentes,
dans lequel pour ledit au moins un dispositif partenaire de communication (20, CP) une pluralité de canaux de communication (31, 32, CC) sont analysés.

9. Procédé selon l'une quelconque des revendications précédentes,

dans lequel un spectre de communication (CS) et/ou un canal de communication (31, 32, CC) sont sélectionnés et/ou utilisés qui ne sont pas utilisés simultanément par des procédés de communication d'autres dispositifs partenaires de communication (21, 22) et/ou entre d'autres dispositifs partenaires de communication (21, 22) dans ledit réseau de communication (1) ou ledit agencement de communication (1).

10. Procédé selon l'une quelconque des revendications précédentes,
dans lequel, pour un canal de communication (31, 32, CC) ayant ou réalisant une distance de communication plus grande entre ledit dispositif de modem CPL ou DSL (10, CPL) et ledit dispositif partenaire de communication sélectionné (20, CP), une plage de fréquences plus basses est choisie pour ledit spectre de communication (CS).

11. Procédé selon l'une quelconque des revendications précédentes,
dans lequel, pour un canal de communication (31, 32, CC) ayant ou réalisant une distance de communication plus courte entre ledit dispositif de modem CPL ou DSL (10, CPL) et ledit dispositif partenaire de communication sélectionné (20, CP), un spectre de communication (CS) avec une plage de fréquences plus élevées est choisi.

12. Procédé selon la revendication 1,
dans lequel ladite étape consistant à espionner est effectuée avec un dispositif de syntoniseur terrestre et/ou un dispositif d'antenne distinct, destinés à recevoir des sources radio et/ou des services de radio.

13. Procédé selon l'une quelconque des revendications précédentes 1 à 12, dans lequel, dans un agencement de communication, qui comprend une pluralité de dispositifs de modem CPL ou DSL (10, 20, 21, 22), ledit procédé est utilisé pour chacun de ladite pluralité de dispositifs de modem CPL ou DSL (10, 20, 21, 22).

14. Procédé selon la revendication 13,

- dans lequel un signal de référence prédéfini est généré par au moins un dispositif de modem CPL ou DSL (10, CPL) et transmis via au moins un canal de communication disponible (31, 32, CC),
- dans lequel les dispositifs partenaires de communication possibles (20, CP) mesurent ledit signal de référence prédéfini via ledit au moins un canal de communication disponible (31, 32, CC) et/ou analysent les données de mesure respectives,
- dans lequel, sur la base desdites mesures, desdites données de qualité de communication (CQD), desdites données de spectre de communication (CSD), desdites données de canal de communication (CCD), ledit spectre de communication (CS) et/ou ledit canal de communication (31, 32, CC) sont choisis ou sélectionnés.

15. Procédé selon l'une quelconque des revendications précédentes 13 à 14,

- dans lequel un signal de référence prédéfini est généré par au moins un dispositif de modem CPL ou DSL (10, CPL) et transmis via au moins un canal de communication disponible (31, 32, CC),
- dans lequel les dispositifs partenaires de communication possibles (20, CP) mesurent ledit signal de référence prédéfini via des canaux autres que lesdits canaux de communication disponibles (31, 32, CC) et/ou analysent les données de mesure respectives,
- dans lequel, sur la base desdites mesures, desdites données de qualité de communication (CQD), desdites données de spectre de communication (CSD), desdites données de canal de communication (CCD), ledit spectre de communication (CS) et/ou ledit canal de communication (31, 32, CC) sont choisis ou sélectionnés.

16. Procédé selon l'une quelconque des revendications précédentes 13 à 15,

- dans lequel ledit dispositif de modem CPL ou DSL mesure le rayonnement du courant porteur ou du canal DSL là où il est connecté à celui-ci,
- dans lequel un dispositif de modem envoie un signal bien connu en tant que signal de référence sur les courants porteurs ou les canaux DSL et tous les modems participants reçoivent et/ou mesurent ce signal sur un canal sans fil,
- dans lequel, avec cette mesure, les dispositifs de modem déterminent le rayonnement du courant porteur ou du canal DSL suivant la fréquence, et
- dans lequel le résultat de ces mesures est échangé vers tous les dispositifs de modem afin de ne pas utiliser ou d'éviter les fréquences ou les domaines spectraux par rapport au rayonnement pertinent pour une communication CPL ou DSL.

**17.** Procédé selon l'une quelconque des revendications précédentes 13 à 16, dans lequel ledit au moins un dispositif de modem CPL ou DSL (10, CPL) et/ou lesdits dispositifs partenaires de communication possibles (20, CP) communiquent et/ou transmettent les données de mesure respectives, leurs résultats d'analyse respectifs, lesdites données de qualité de communication (CQD), lesdites données de spectre de communication (CSD), lesdites données de canal de communication (CCD), ledit spectre de communication (CS) et/ou ledit canal de communication (31, 32, CC) auxdits dispositifs partenaires de communication possibles (20, CP) et/ou audit au moins un dispositif de modem CPL ou DSL (10, CPL).

**18.** Procédé selon l'une quelconque des revendications précédentes 13 à 17, dans lequel lesdits procédés consistant à générer, à transmettre ledit signal de référence prédéfini, à mesurer, à analyser la mesure, et/ou à communiquer les données respectives auxdits dispositifs partenaires de communication possibles (20, CP) et/ou audit au moins un dispositif de modem CPL ou DSL (10, CPL) sont effectués au cours de ladite étape (S2) consistant à générer et/ou à fournir des données de qualité de communication (CQD), lors de ladite étape (S3a, S3b) consistant à déterminer au moins des données de spectre de communication (CSD) et/ou des données de canal de communication (CCD), et/ou lors de ladite étape (S4a, S4b) consistant à déterminer et/ou à sélectionner un spectre de communication (CS) et/ou un canal de communication (31, 32, CC).

**19.** Dispositif de modem CPL ou DSL, comprenant un moyen destiné à

- générer et/ou fournir des données de qualité de communication (CQD) par rapport à au moins un canal de communication (31, 32, CC) entre ledit dispositif de modem CPL ou DSL (10, CPL) et au moins un dispositif partenaire de communication (20, CP), lesdites données de qualité de communication (CQD) décrivant au moins des capacités de communication, une qualité de communication et/ou des caractéristiques de communication au moins dudit au moins un dispositif partenaire de communication (20, CP) et/ou dudit au moins un canal de communication (31, 32, CC),
- déterminer au moins des données de spectre de communication (CSD) et/ou des données de canal de communication (CCD) basées sur lesdites données de qualité de communication (CQD) et décrivant au moins un spectre de communication (CS) pour ledit dispositif de modem CPL ou DSL (10, CPL) et/ou ledit au moins un canal de communication (31, 32, CC), chacune de ces données déterminées est déterminée par rapport audit au moins un dispositif partenaire de communication (20, CP),
- déterminer et/ou sélectionner un spectre de communication (CS) et/ou un canal de communication (31, 32, CC) parmi ledit au moins un canal de communication (31, 32, CC), chacune de cette détermination et/ou de cette sélection est basée sur lesdites données de spectre de communication (CSD) et/ou sur lesdites données de canal de communication (CCD), et
- communiquer avec ledit au moins un dispositif partenaire de communication (20, CP) via ledit canal de communication sélectionné (31, 32, CC) et/ou ledit spectre de communication sélectionné (CS),

**caractérisé par**
un dispositif d'antenne distinct destiné à vérifier la présence, l'existence et/ou l'activité d'autres sources radio et/ou services de radio externes en espionnant dans l'air ledit dispositif de modem CPL ou DSL pour détecter s'il y a des services de radio et/ou des sources radio disponibles, dans lequel, si un service pertinent est découvert et/ou une source pertinente est découverte au niveau de n'importe quel emplacement de fréquence, la bande de fréquences respective est omise dans une communication CPL ou DSL.

**20.** Dispositif de modem CPL ou DSL selon la revendication 19, comprenant en outre :

un dispositif de syntoniseur terrestre destiné à recevoir des sources radio et/ou des services de radio.

**21.** Agencement de communication,

- qui comprend une pluralité de dispositifs de modem CPL ou DSL (10, 20, 21, 22), chacun de ladite pluralité de dispositifs de modem CPL ou DSL (10, 20, 21, 22) comprenant :

un moyen destiné à

- générer et/ou fournir des données de qualité de communication (CQD) par rapport à au moins un canal de communication (31, 32, CC) entre ledit dispositif de modem CPL ou DSL (10, CPL) et au moins un dispositif partenaire de communication (20, CP), lesdites données de qualité de communication (CQD) décrivant au moins des capacités de communication, une qualité de communication et/ou des caractéristiques de communication au moins dudit au moins un dispositif partenaire de communication (20, CP) et/ou dudit au moins un canal de communication (31, 32, CC),

- déterminer au moins des données de spectre de communication (CSD) et/ou des données de canal de communication (CCD) basées sur lesdites données de qualité de communication (CQD) et décrivant au moins un spectre de communication (CS) pour ledit dispositif de modem CPL ou DSL (10, CPL) et/ou ledit au moins un canal de communication (31, 32, CC), chacune de ces données déterminées est déterminée par rapport audit au moins un dispositif partenaire de communication (20, CP),

- déterminer et/ou sélectionner un spectre de communication (CS) et/ou un canal de communication (31, 32, CC) parmi ledit au moins un canal de communication (31, 32, CC), chacune de cette détermination et/ou de cette sélection est basée sur lesdites données de spectre de communication (CSD) et/ou sur lesdites données de canal de communication (CCD), et

- communiquer avec ledit au moins un dispositif partenaire de communication (20, CP) via ledit canal de communication sélectionné (31, 32, CC) et/ou ledit spectre de communication sélectionné (CS),

**caractérisé par**
un dispositif d'antenne distinct destiné à vérifier la présence, l'existence et/ou l'activité d'autres sources radio et/ou services de radio externes en espionnant dans l'air ledit dispositif de modem CPL ou DSL pour détecter s'il y a des services de radio et/ou des sources radio disponibles, dans lequel, si un service pertinent est découvert et/ou une source pertinente est découverte au niveau de n'importe quel emplacement de fréquence, la bande de fréquences respective est omise dans une communication CPL ou DSL.

22. Agencement de communication selon la revendication 21, dans lequel lesdits dispositifs de modem CPL ou DSL comprennent en outre :

un dispositif de syntoniseur terrestre destiné à recevoir des sources radio et/ou des services de radio.

23. Programme informatique,
destiné à effectuer le procédé selon l'une quelconque des revendications 1 à 18, lorsqu'il est exécuté sur un ordinateur ou un moyen de traitement de signal numérique.

24. Support de stockage lisible par ordinateur,
portant un programme informatique selon la revendication 23.

EP 1 530 313 B1

Fig. 1

# Network Initialization Phase

Fig. 1A

## Communication Phase

**U1** — 1$^{st}$ communication request

**U2** — Search for best fit frequency spectrum according to SNR, coexistence to radio services and lowest radiation

**U3** — start communication

**U4** — Is distance of 2$^{nd}$ communication shorter ?

**U1'** — 2nd communication request

**U2'** — Search for best fit frequency spectrum according to SNR, coexistence to radio services and lowest radiation

Spectrum overlap to 1st communication ? — Yes / No — **U3'**

**U5** — Search for 2$^{nd}$ communication an other best fit frequency spectrum according to SNR, coexistence to radio services and lowest radiation in higher frequency range

**U6** — Search for 1$^{nd}$ communication an other best fit frequency spectrum according to SNR, coexistence to radio services and lowest radiation in higher frequency range, shift 1$^{st}$ communication to higher frequency range

**U7** — start communication

## Fig. 1B

Fig. 2

Fig. 3

EP 1 530 313 B1

Fig. 4

Fig. 5

Radio Services

Radiation

20,CP

PLC Modem

Antenna

31,CC

PLC Modem

10,PLC

Fig. 6A

EP 1 530 313 B1

Fig. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0987852 A2